# EUROPEAN PATENT APPLICATION

(11) **EP 4 700 595 A1**
(43) Date of publication of application: **25.02.2026**
(21) Application number: 25196354.2
(22) Date of filing: 18.08.2025
(51) Int. Cl.: G06F 16/22, G06F 16/334

(54) **DUAL-STAGE VECTOR SEARCH FOR ENHANCED RETRIEVAL AUGMENTED GENERATION**

(30) Priority: 21.08.2024 US 202418811735
(71) Applicant: NetApp, Inc., San Jose, CA 95128 (US)
(72) Inventor: Srinivasan, Kiran, San Jose, CA, 95128 (US); Banerjee, Arindam, San Jose, CA, 95128 (US); Pailet, Gregory, San Jose, CA, 95128 (US)
(74) Representative: Grünecker Patent- und Rechtsanwälte PartG mbB

(57) **Abstract**

The disclosure describes system, devices, and methods for dual-stage vector search. In an example implementation, a method for operating a computer-implemented service is provided. The method includes receiving a context request for content with which to augment a prompt, generating a base vector based on input data in the context request and quantizing the base vector to produce a quantized vector. The method also includes searching a vector database to identify content items based at least on the quantized vector and obtaining the content items and generating base vectors for the content items. The method further includes selecting a subset of the content items based on at least on the base vector generated for the input data and the base vectors for the content items.

## Description

### TECHNICAL FIELD

Embodiments of the present disclosure relate generally to vector database technology, and in particular, to vector processing in the context of retrieval augmented content generation.

### BACKGROUND

Vector databases are used extensively in artificial intelligence (AI) applications, especially in generative AI use-cases to enable semantic searching for content. In the context of Retrieval-Augmented-Generation (RAG), the vector database is used to store semantically indexed data that is then used to retrieve context in relation to a query.

Assuming that the dataset is textual, the input document during the training (indexing) phase is chunked up into smaller fragments (e.g., sentences or paragraphs). Each chunk is then converted to a mathematical representation (vector embedding), which is a float vector with a significant dimensionality (usually 100+ dimensions). The chunks are stored in the vector database along with the appropriate chunk data.

During inferencing, when a particular query is presented, the vector embedding of the query is computed. Next, the query's embedding is searched against all the embedding vectors in the dataset to find the nearest neighboring vectors (in terms of a distance measure such as Euclidean or cosine distance) via an approximate nearest neighbor search algorithm (ANN). The set of neighboring vectors is deemed to be semantically closest to the query and forms the query's retrieval context. In RAG, this context is presented to the LLM to generate more accurate answers that are bounded by the facts from the input dataset.

Each embedding vector may have around 1024 dimensions (or more) to achieve good accuracy. On the other hand, each lowest sized chunk could be a sentence. Therefore, for an input chunk of size 100 bytes, an embedding vector size of 4096 bytes (1024 * 4) is stored, assuming 32-bit floats. Moreover, the exact chunk text is also stored by the vector database, all of which consumes a great deal of storage space. In addition, to perform the ANN algorithm, the vectors need to be indexed and the indexing data structures also consume significant space. Therefore, starting from the text chunks significant bloat occurs in terms of storage space needed for an effective vector database. This bloat becomes horrendous as the input dataset size increases.

### SUMMARY

The technology described herein includes a dual-stage vector search process that allows the size of embedding vectors to be reduced, thereby reducing bloat, while maintaining the quality of the results provided by the vector databases. While generally applicable to numerous endeavors, such advantages may be especially useful in the context of RAG environments and/or other such AI applications.

In an implementation, a method for operating a computer-implemented service to provide said dual-stage vector search is provided (referring interchangeably to the terms embedding vectors, vector embeddings, and vectors).

During training, the method includes storing quantized vectors in a vector database to conserve space. The quantized vectors represent quantized versions of base embedding vectors produced for content chunks also stored in the database. As the quantized vectors are smaller in size than the base vectors, they occupy less space than the base vectors otherwise would. At inference time, the method includes receiving a context request for content with which to augment a prompt. A base vector is generated based on input data in the context request. The base prompt is then quantized, resulting in a quantized vector that is used to search the vector database. However, since the quantized vector is smaller than the base vector, it carries less information. Accordingly, the vector database is searched for a larger number of target vectors than it otherwise would be if the base vector were used.

The search of the vector database returns a set of content items that may then themselves be used to produce a set of base vectors. That is, each content item is processed to generate a base vector having the same or similar dimensions as that of the base vector generated for the input data. The base vectors are then processed to identify a subset of the content items that are relevant to the input data. In other words, the base vectors are used to narrow the content items to a subset that will provide useful context for the prompt.

In some implementations, each dimension of the base vectors is represented by a 32-bit floating point number. Alternatively, or in addition, binary quantization may be used to quantize the base vectors. In such embodiments, each dimension of the base vectors is represented by a single binary bit in each corresponding dimension of the quantized vectors, substantially reducing the amount of space occupied by the vector database in memory.

This Overview is provided to introduce a selection of concepts in a simplified form that are further described below in the Technical Disclosure. It may be understood that this Overview is not intended to identify key features or essential features of the claimed subject matter, nor is it intended to be used to limit the scope of the claimed subject matter.

### BRIEF DESCRIPTION OF THE DRAWINGS

For a more complete understanding of the present invention(s), and the advantages thereof, reference is now made to the following descriptions taken in conjunction with the accompanying drawings.
Figure 1 illustrates an operational environment in an implementation.
Figure 2A illustrates a training method in an implementation.
Figure 2B illustrates an inference method in an implementation.
Figure 3 illustrates a software architecture in an implementation.
Figure 4A illustrates an operational example in an implementation with respect to quantizing and storing a chunk.
Figure 4B illustrates another operational example in an implementation with respect to quantizing query data.
Figure 5A illustrates a training sequence in an implementation.
Figure 5B illustrates an inference sequence in an implementation.
Figure 6 illustrates another operational environment in an implementation.
Figure 7A illustrates an operational scenario in an implementation.
Figure 7B illustrates another operational scenario in an implementation.
Figure 8 illustrates a computing system suitable for implementing the various operational environments, architectures, environments, methods, processes, scenarios, sequences, and frameworks discussed below with respect to the other Figures.

Corresponding numerals and symbols in different figures generally refer to corresponding parts unless otherwise indicated. The figures are drawn to clearly illustrate the relevant aspects of the preferred embodiments and are not necessarily drawn to scale.

### DETAILED DESCRIPTION

Technology is disclosed herein that mitigates the problems discussed above with respect to vector databases. In various embodiments, quantization is used to reduce the size of embeddings, thereby reducing the size of the embedding vectors stored in vector databases and potentially an increase in the speed with which the databases may be searched. However, along with quantization comes a loss of accuracy. Therefore, a twostage search process is disclosed that mitigates or even eliminates the downsides presented by quantization.

More specifically, with quantization the size of the per-dimensional floating-point value may be decreased to 16-bits, 8-bits, 4-bits or even 1-bit. With each step of quantization, the accuracy of the ANN retrieval process decreases.

For example, with binary quantization, the capacity required in the vector database is smaller, the indices are smaller, and the distance computations are simpler too. Overall, the storage and algorithmic compute efficiency of the vector database increases significantly. The corresponding bloat decreases correspondingly. For example, with 100-byte chunks, and 1024-dimensional binary-quantized vectors, the bloat per chunk is only 5 times that of the chunks, compared to 40 times for just the non-quantized vector space.

To compensate for the loss in accuracy, a technique is employed to re-rank chunks. Typically, in a vector database ANN search, for a given query, the top-20 or top-30 closest vectors to a given query vector may be returned. However, with binary quantization, given the loss in accuracy, the top-40 or top-60 nearest vectors are obtained from the vector database. Subsequently, the full non-quantized vectors of the ANN results are generated, with which a secondary search of the limited set of ANN results is performed to obtain the top-20 or top-30 results. This process is referred to as re-ranking, which helps to restore the lost accuracy caused by quantization.

In some implementations, graphical processing units (GPUs) may be employed to increase the speed of the ANN algorithm. Likewise, since most embeddings are created using neural network models, the embedding algorithms employed to generate the base vectors - as well as the quantization algorithms - may also be executed on GPUs. The combination of binary quantization and the usage of GPUs results in very fast vector database search capabilities.

In various embodiments, the techniques described herein use binary quantization to make sure the vectors, indices are smaller, and the lookups are faster. Importantly, the full embedding vectors of the chunks need not be stored in the vector database during training. Rather, the full embedding vectors for the chunks are re-computed at inference.

For example, at inference time, an ANN search is performed of the vector database for the top-n content items. The top-n items are retrieved from the vector database and full embedding (or base) vectors are computed for each item. A second ANN search is then performed of the resulting base vectors to identify the next top-k content items (where k<n). The results of the second search may be provided as context to enhance an LLM prompt or other such generative AI queries.

In some implementations, content chunks may be compressed when stored in a vector database. Alternatively, or in addition, their corresponding quantized vectors may also be stored in a compressed format. Lossless compression techniques may be employed to ensure the fidelity of the quantized vectors.

The techniques disclosed herein may be implemented in a context service capable of orchestrating or otherwise causing the generation and storing vectors in vector databases, as well as searches of vector databases. The context service itself may be implemented as a stand-alone service or as a service that is integrated with one or more other services. For example, the vector database service may be integrated with a storage service that provides enterprise-grade storage for applications and workloads.

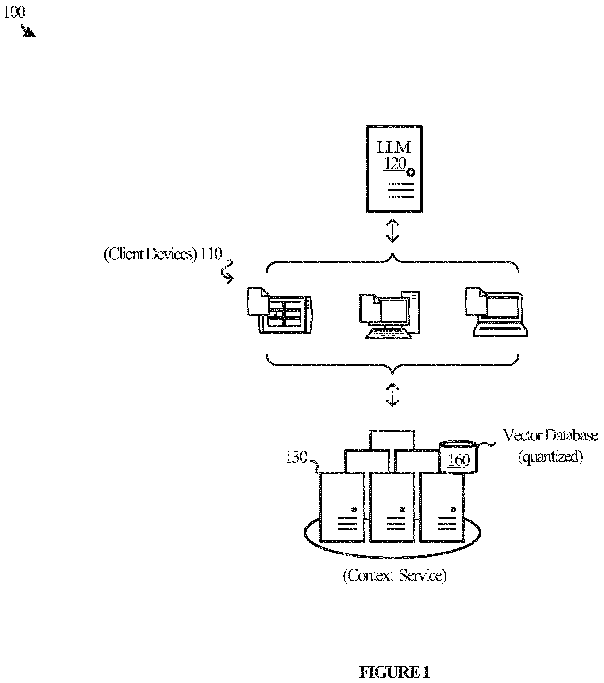

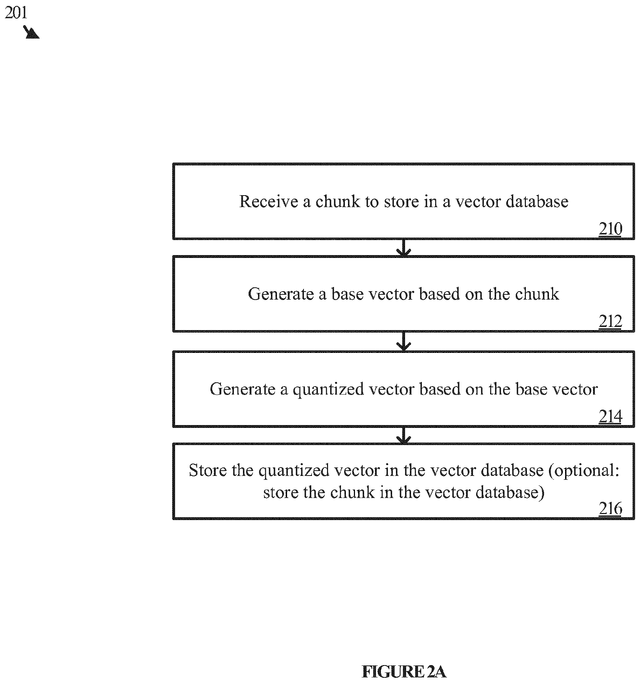

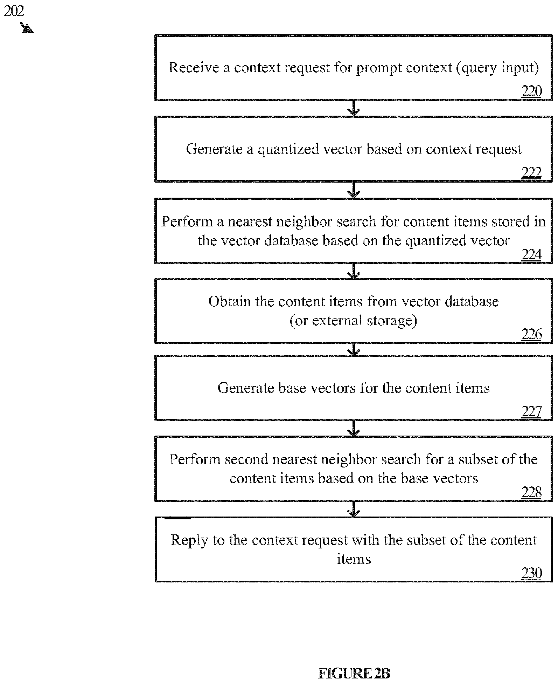

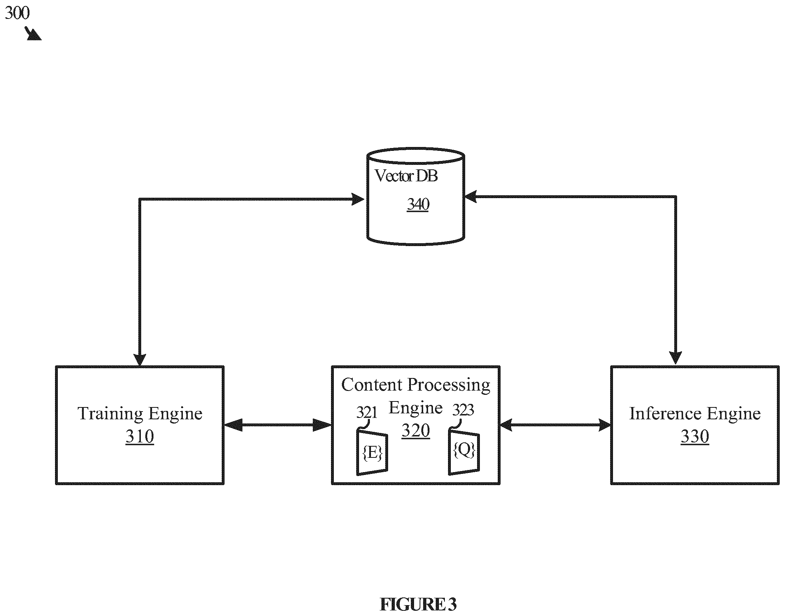

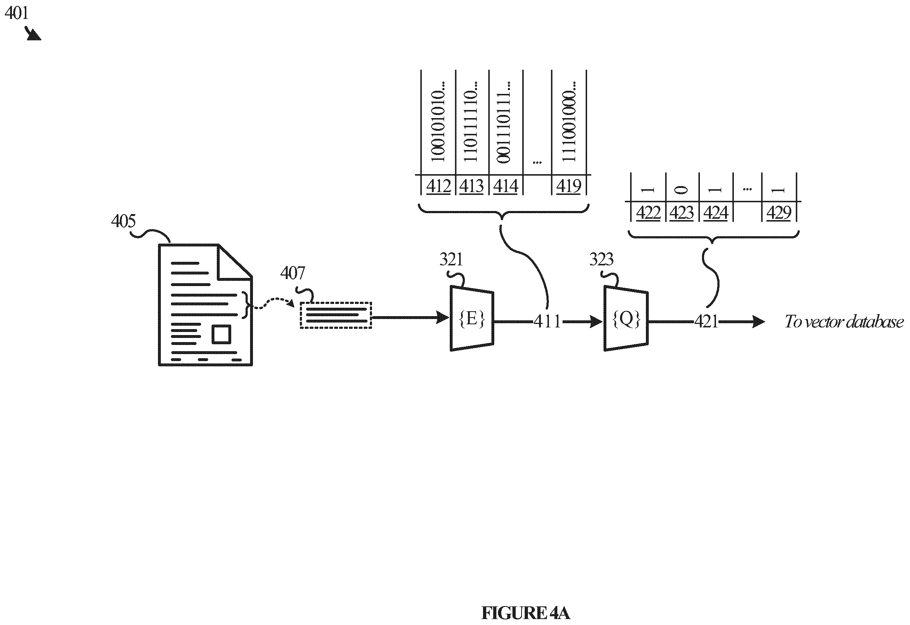

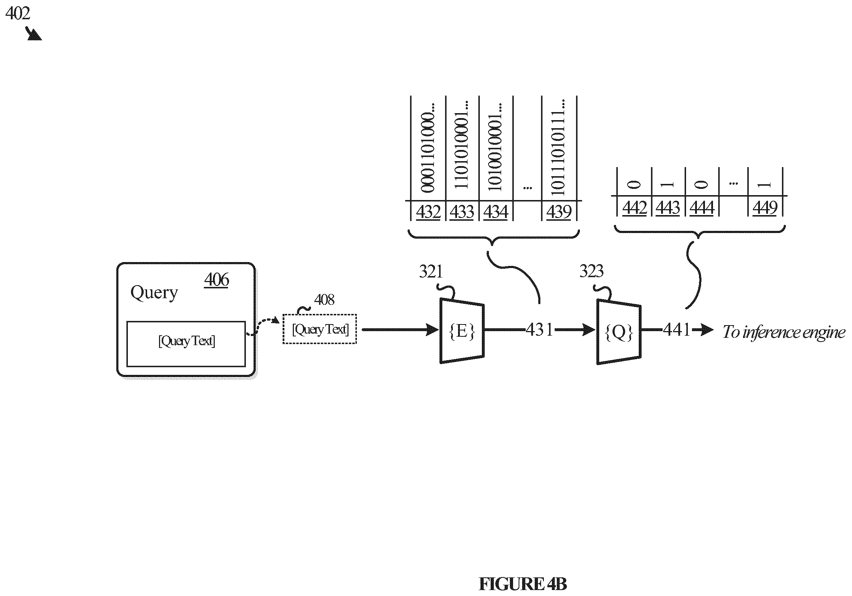

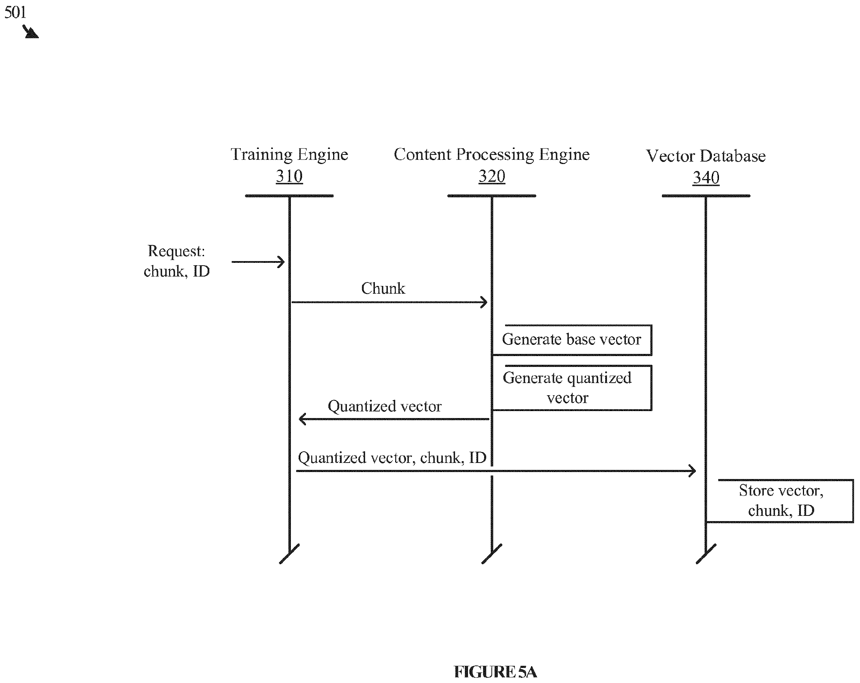

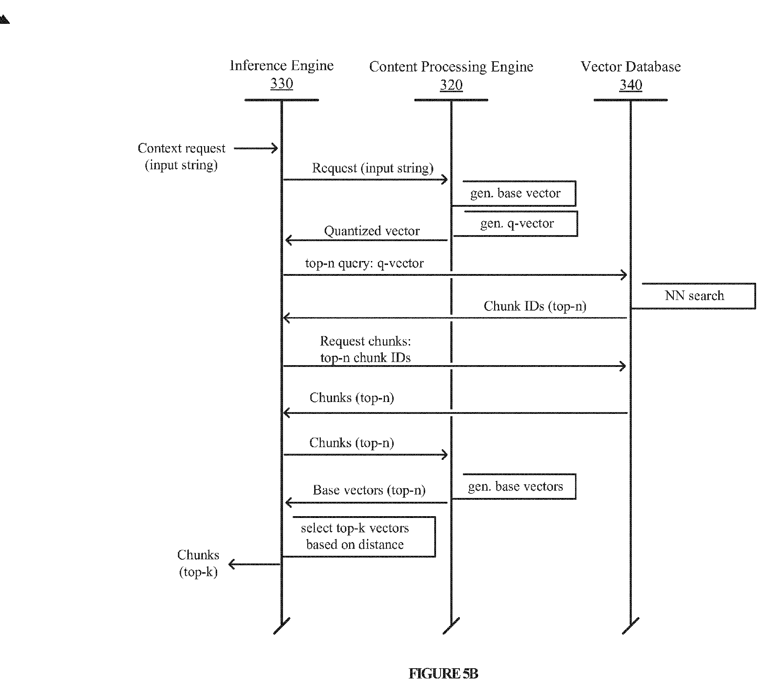

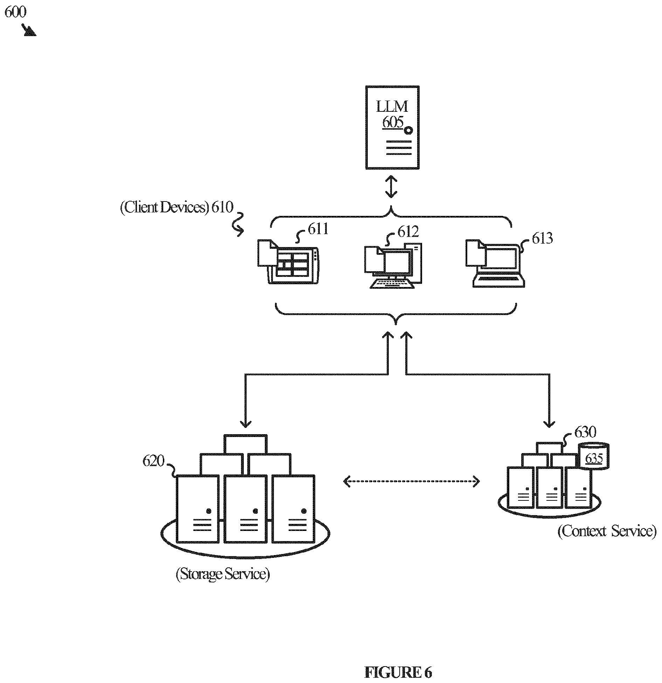

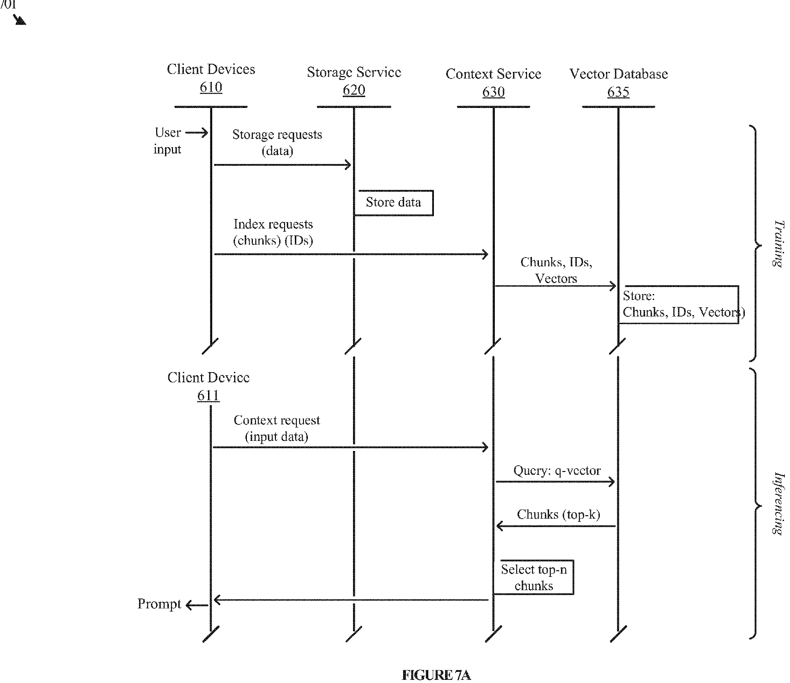

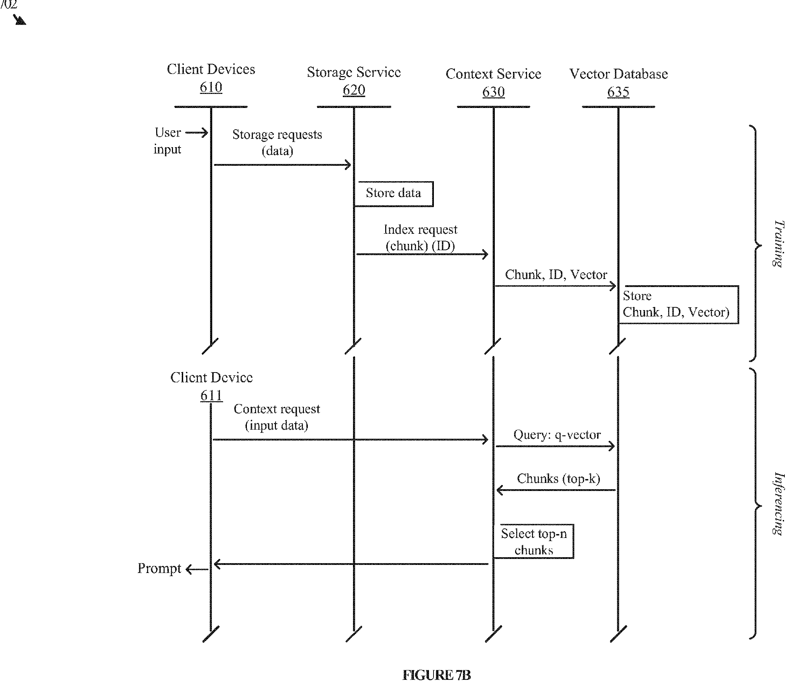

Turning now to the drawings, an implementation of a representative context service is illustrated in Figure 1, while a training method and inference method are disclosed in Figure 2A and Figure 2B respectively. Figure 3 illustrates a software architecture for implementing the context service illustrated in Figure 1. Figure 4A illustrates an example quantization process in the context of the training method of Figure 2A, while Figure 4B illustrates quantization in the context of the inference method of Figure 2B. Figure 5A illustrates an example of the training method of Figure 2A more generally, while Figure 5B illustrates a general example of the inference method of Figure 2B. Figure 6 illustrates an alternative operational environment that includes a storage service along with a context service, while Figures 7A and 7B illustrate operational scenarios related thereto.

With respect to **Figure 1** operating environment 100 is illustrated, which includes client devices 110, LLM 120, and context service 130. Client devices 110 are representative of computing devices capable of hosting applications suitable for interface with LLM services and context services. Examples include - but are not limited to - server computers, personal computers, laptops, tablets, smartphones, server computers, computing appliances, and the like. Example applications include, but are not limited to, productivity applications, database applications, gaming business applications, and the like. The applications running on client devices 110 send prompts to LLM 120. The applications supplement the prompts with context supplied by context service 130.

Context service 130 generates context using vector database 160. More specifically, context service 130 creates, populates, or otherwise "trains" vector database 160 using chunks provided by client devices 110. Context service 130 then uses vector database 160 for inference purposes to obtain context data with which client devices 110 supplement prompts. Figure 2A illustrates a training method 201 employed by context service 130 to train vector database 160, while Figure 2B illustrates an inference method 202 employed by context service 130 to generate context.

Referring to **Figure 2A****,** training method 201 may be implemented in program instructions in the context of the software and/or firmware elements of a context service (e.g., context service 130). The program instructions, when executed by one or more processing devices of one or more computing systems, direct the one or more computing systems to operate as follows, referring parenthetically to the steps in Figure 2A, and in the singular to a computing device for the sake of clarity.

To begin, the computing device receives (210) a chunk from a client device for storage in a vector database. The chunk refers to portions of a document produced by client devices executing applications that produce content. Examples of chunks include words, phrases, sentences, paragraphs, and the like. The client device may also provide an identifier (ID) associated with the chunk.

Next, the computing device generates (212) a base vector for the chunk. This entails performing an embedding function on the chunk to create a vector having various dimensions. The computing device quantizes (214) the base vector to produce a quantized vector. In doing so, the computing device reduces the size of the base vector to conserve space in the vector database and to increase search efficiency. In some embodiments, the computing device may perform binary quantization on the base vector to produce the quantized vector. Other types of quantization may be employed to reduce the size of each dimensional representation to under 32-bit floating values (e.g., 16-bit, 8-bit, 4-bit).

The computing device stores (216) the quantized vector for the chunk in the vector database in association with the chunk ID. Optionally, the chunk content itself may also be stored in the vector database. In the aggregate, the computing device indexes many chunks into the vector database supplied by one or more client devices so that the database eventually holds enough content that useful context can be supplied from it with respect to inference processing, described next with respect to Figure 2B.

**Figure 2B** illustrates inference method 202, which may also be implemented in program instructions in the context of the software and/or firmware elements of a context service (e.g., context service 130). The program instructions, when executed by one or more processing devices of one or more computing systems, direct the one or more computing systems to operate as follows, referring parenthetically to the steps in Figure 2B, and in the singular to a computing device for the sake of clarity.

To begin, the computing device receives (220) a request for prompt context. The prompt context may ultimately be used by an LLM or other such generative AI to generate a response to a client prompt. Upon receiving the request, the computing device generates (222) a base vector for the data included in the request. The computing device then quantizes the base vector to produce a quantized vector.

Using the quantized vector, the computing device performs (224) a nearest neighbor search for the top-n relevant chunks stored in the same vector database described above with respect to Figure 2B. The computing device performs the search by interfacing with a front-end of the vector database to request the top-n chunks based on distances between the chunk's corresponding quantized vectors and the quantized vector produced for the input data. Various distance measure may be used such as Cosine distance, Euclidean distance, and the like. The computing device receives chunk IDs from vector database with which it retrieves the corresponding chunks either from the vector database itself or from external storage (226).

The computing device proceeds to generate a base vector for each of the top-n chunks (227). The computing device performs a second nearest neighbor search (228), but this time for the top-k chunks and with respect to the base vectors produced for the retrieved chunks (where k<n). The second search compares the distance between the base vectors produced for the retrieved chunks and the base vector produced for the input data of the context request to identify the top-k chunks. The distances may be given and compared in terms of Cosine distance, Euclidean distance, or the like.

After determining the top-k chunks, the computing device replies to the request with the top-k chunks (230). The requesting client may use the content in the chunks to supplement a prompt that it submits to an LLM. The LLM uses the context when formulating its response to the prompt.

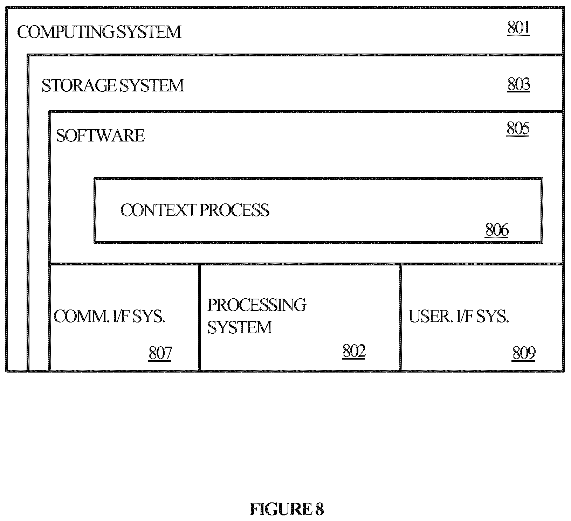

Example elements capable of implementing training and inferencing processes are shown in **Figure 3****.** In particular, Figure 3 illustrates operational architecture 300, which is representative of a software architecture suitable for implementing context service 130. Software architecture includes training engine 310, content processing engine 320, inference engine 330 and vector database 340. Training engine 310, content processing engine 320, inference engine 330, and vector database 340 may be implemented in hardware, firmware, and/or software, as well as combinations and variations thereof, in the context of a suitable computing device, of which computing device 801 in Figure 8 is representative.

Training engine 310 is representative of one or more components capable of performing training operations to index and store chunks and chunk vectors (quantized vectors) to vector database 340, as well as chunk IDs. Content processing engine 320 is representative of one or more components capable of generating vectors and quantizing vectors. Content processing includes embedding function 321 and quantization function 323. Content processing engine 320 generates base vectors using embedding function 321 and quantized vectors using quantization function 323.

Vector database 340 is representative of one or more components capable of hosting vector database. Vector database 340 interfaces with training engine 310 to store chunks, their chunk IDs, and their quantized vectors. Vector database 340 also interfaces with inference engine to conduct searches and suppling chunks. It may be appreciated that, in some cases, a storage external from or otherwise separate with respect to vector database 340 may be employed to store the chunks.

Inference engine 330 is representative of one or more components capable of servicing context requests from clients. Inference engine 330 interfaces with content processing engine 320 to obtain base vectors and quantized vectors for query input data. Inference engine 330 also interfaces with vector database 340 to perform searches based on the quantized vectors produced by content processing engine 320. Inference engine 330 may also interface with vector database 340 to retrieve content chunks.

In some implementations, an instance of operational architecture 300 may be implemented on a single computing device or apparatus. In such an implementation, the entirety of vector database 340 may be maintained in system memory - that is, random access memory (RAM). Doing so allows vector database 340 to be executed at very high speeds. However, the feasibility of implementing vector database 340 in RAM is due to the dual-vector approach disclosed herein: storing smaller vectors in the database, while generating dense (base) vectors at run-time, rather than persisting them to disk. It may be appreciated that the contents of vector database 340 may be persisted to disk, but at runtime, on a server computer or other such resource with sufficient capacity, it can be hosted in RAM so has to be fast enough to support context queries in real-time.

To enhance the capacity of vector database 340, the compute resource on which it is hosted could allocate extra processing resources to it at certain times. For example, when regenerating base vectors for chunks returned by a top-n search, the host compute could allocate one or more GPUs to generating the base vectors. Alternatively, or in addition, the host compute could allocate additional threads, or hardware accelerators, to the task of generating the base vectors. The host compute could also employ lossless compression techniques to further enhance the capacity of vector database 340. For example, the quantized vectors could be compressed and stored in a compressed format and decompressed at runtime to facilitate a nearest-neighbor search. Such decompression could also be offloaded to GPUs, hardware accelerators, or the like.

**Figures 4A** **and** **4B** illustrate the application of the training method of Figure 2A and the inference method of Figure 2B respectively. The operational examples are illustrative of operations carried out by the elements of operational architecture 300 in Figure 3, including content processing engine 320.

Operational example 401 in Figure 4A includes an electronic document 405 such as a word processing document, presentation, spreadsheet, or the like. Other types of content are possible such as email content, gaming content, business data, and so on. Content processing engine 320 receives chunk 407, which is representative of a portion of document 405 sent by a client to be indexed into a vector database. Chunk 407 may be, for example, a sentence or paragraph of document 405.

Content processing engine 320 executes embedding function 321 on chunk 407. Embedding function 321 is used by content processing engine 320 to generate a feature vector for chunk 407, represented by base vector 411. Base vector 411 includes multiple dimensions represented by dimensions 412, 413, 414, and 419. In an example, base vector may have 1024 dimensions with each dimension represented by a 32-bit floating point number.

As discussed above, such large vectors present a challenge with respect to storage space. Accordingly, content processing engine 320 supplies base vector 411 to quantization engine 323. Quantization engine 323 converts base vector 411 to a smaller vector represented by quantized vector 421.

Quantized vector 421 in this example is a binary vector in that each of its dimensions 422-429 are represented by a single bit. Thus, quantized vector 421 occupies 1/32 as much space as base vector 411. Quantized vector 421 is stored in vector database 340, thereby allowing it to be indexed and searched with respect to context queries.

In Figure 4B, content processing engine 320 is employed to produce a base vector and a quantized vector with respect to query data, as opposed to chunk data. In Figure 4B, a query 406 includes query text 408, which is generally representative of user input or other such input data that may form the basis of a prompt. Content processing engine 320 inputs the query text to embedding function 321.

Embedding function 321 produces a vector embedding of multiple dimensions (e.g., 1024) represented by base vector 431, which is then fed to quantization function 323. Quantization function 323 applies a suitable quantization process to base vector 321 (e.g., binary quantization) to produce quantized vector 441. Quantized vector 441 may then be used by inference engine 330 to query vector database 340, for example.

**Figures 5A** **and** **5B** illustrate operational sequences related to training and inferencing in an implementation. Figure 5A includes training sequence 501, which may be carried out by elements of a context service, such as training engine 310 and content processing engine 320 of Figure 3. Figure 5B includes inferencing sequence 502, which may be carried out by content processing engine 320 and inference engine 330 of the context service. As such, the following discussion references elements of operating architecture 300 of Figure 3.

Referring first to Figure 5A, training sequence 501 begins in response to the context service receiving chunks for storage at vector database 340. Training engine 310 receives requests that include one or more chunks and associated chunk ID(s). Training engine 310 provides the chunks to content processing engine 320. Content processing engine 320 performs an embedding operation on the chunks to produce base vectors for the chunks received by content processing engine 320. Further, content processing engine 320 performs a quantization function (e.g., binary quantization) on the base vectors for the chunks to produce quantized vectors for the chunks.

Upon vectorizing the chunks and quantizing the vectors, content processing engine 320 provides the quantized vector to training engine 310. Training engine 310 provides the quantized vector and associated ID to vector database 340 for storage thereon. Training engine 310 may also provide the chunk to vector database 340 for storage thereon. Vector database 340 includes one or more data structures including indications of the quantized vectors, associated IDs, and chunks, among other information.

Referring next to Figure 5B, inferencing sequence 502 begins in response to the context service receiving a request for context. Inference engine 330 receives the context request and provides input data in the request to content processing engine 320. Content processing engine 320 performs an embedding operation on the input data to generate a base vector for the context request. Content processing engine 320 also performs a quantization function (e.g., binary quantization) on the base vector to produce a quantized vector . Content processing engine 320 provides both the base vector and the quantized vector to inference engine 330.

Inference engine 330 queries vector database 340 using the quantized vector to obtain a top-n number of chunks having quantized vectors closest in distance to the quantized vector. That is, vector database 340 performs a top-n nearest neighbor search of the quantized vectors in the database to find n-number of chunks closest in distance to the query input data. Vector database 340 returns the chunk IDs for the top-n chunks. Here, inference engine 330 proceeds to request the chunks themselves from vector database 340. Alternatively, inference engine 330 could request the chunks from external storage if stored elsewhere other than vector database 340.

Inference engine 330 proceeds to convert the chunks to base vectors with which it can perform a secondary nearest neighbor search. First, inference engine 330 supplies the chunks to content processing engine 320. Content processing engine 320 inputs the chunks to embedding function 321 to produce base vectors and returns the base vectors to inference engine 330. Inference engine 330 calculates the distance in vector space between the base vector for the query data, and then selects the top-k base vectors nearest to the query data's base vector. Inference engine 330 supplies the corresponding top-k chunks to the client, allowing the client to integrate the chunk data into its LLM prompt(s).

**Figure** 6 illustrates operating environment 600 in which a context service and a data storage service operate. In particular, operating environment 600 includes client devices 610, LLM 605, storage service 620, and context service 630.

Client devices 610, including client device 611-613, are representative of computing devices capable of hosting applications suitable for interface with LLM services, context services, and data storage and management services. Examples include - but are not limited to - server computers, personal computers, laptops, tablets, smartphones, server computers, computing appliances, and the like. Example applications include, but are not limited to, productivity applications, database applications, gaming business applications, and the like. The applications running on client devices 610 send prompts to LLM 605, and LLM 605 returns replies to the prompts. The applications supplement the prompts with context supplied by context service 630. Further, the applications running on client devices 610 send requests to store or retrieve documents at storage service 620.

Context service 630 generates the context using vector database 635. More specifically, context service 630 creates, populates, or otherwise "trains" vector database 635 using chunks provided by client devices 610, and in some cases, by storage service 620. Context service 630 then uses vector database 635 for inference purposes to obtain context data with which client devices 610 supplement prompts.

Storage service 620 is representative of a data storage and management server, application, device, system, or the like, capable of managing documents provided by client devices 610. In an example embodiment, storage service 620 includes one or more hosts, controllers, and storage devices, such as flash disks and/or capacity drives (e.g., solid-state drives (SSDs), hard-disk drives (HDDs)). Storage service 620 may include a data management application suitable for interface with client devices 610 and context service 630 to store and manage access to data.

Figure 7A illustrates operational scenario 701, which is representative of an implementation of context service 630 as a service that is separate from storage service 620.

In operation, client devices 610 supply data to be stored by storage service 620. The data may be supplied in accordance with a variety of formats including blocks, chunks, or the like, and in accordance with any suitable protocol. Storage service 620 receives the data and stores it for later access.

Concurrently with the storage operations described immediately above, or subsequent thereto, client devices 610 provide index requests including chunks and chunk IDs to context service 630. The chunks may represent, for example, sentences, paragraphs, or other portions of documents or other digital content items. Context service 630 performs vectorizing, quantizing, and indexing operations, such as those described above with respect to Figures 1-5. Context service 630 provides the chunk, a quantized vector of the chunk, and an associated ID to vector database 635 to be stored.

With respect to the inferencing process, a client device submits a context request to storage service 620. It is assumed for exemplary purposes client device 611 is said device. The request includes query data such as text input by a user in a user interface to a productivity application or the like. Context service 630 performs vectorizing, quantizing, and querying operations with respect to the query data, such as those described above. Context service 630 queries vector database 635 using a quantized vector generated based on the query text to identify and obtain a top-n set of chunks from the database.

Context service 630 then identifies a top-k set of the chunks based on full (base) vectors that it generates for the top-n set of chunks, as well as a full vector generated for the query data. Context service 630 replies to client device 611 with the top-k set of chunks. Client device 611 may then use the chunk data to enhance an LLM prompt.

Figure 7B illustrates operational scenario 702, which is representative of an implementation of context service 630 as a service that is at least partially integrated with storage service 620. For example, context service 630 could be at the host layer or controller layer of storage service 620, or in some other suitable manner.

In operation, client devices 610 supply data to be stored by storage service 620. The data may be supplied in accordance with a variety of formats including blocks, chunks, or the like, and in accordance with any suitable protocol. Storage service 620 receives the data and stores it for later access.

Concurrently with the storage operations described immediately above, or subsequent thereto, storage service 620 (rather than client devices 610) provides index requests including chunks and chunk IDs to context service 630. The chunks may represent, for example, sentences, paragraphs, or other portions of documents or other digital content items. Context service 630 performs vectorizing, quantizing, and indexing operations, such as those described above with respect to Figures 1-5. Context service 630 provides the chunk, a quantized vector of the chunk, and an associated ID to vector database 635 to be stored.

The inferencing process in operational scenario 701 is largely the same as that in operational scenario 702. In operation, a client device submits a context request to storage service 620. It is assumed for exemplary purposes client device 611 is said device. The request includes query data such as text input by a user in a user interface to a productivity application or the like. Context service 630 performs vectorizing, quantizing, and querying operations with respect to the query data, such as those described above. Context service 630 queries vector database 635 using a quantized vector generated based on the query text to identify and obtain a top-n set of chunks from the database.

Context service 630 then identifies a top-k set of the chunks based on full (base) vectors that it generates for the top-n set of chunks, as well as a full vector generated for the query data. Context service 630 replies to client device 611 with the top-k set of chunks. Client device 611 may then use the chunk data to enhance an LLM prompt.

It may be appreciated from the discussion above that developing strategies to mitigate space bloat and storage access efficiency has become important for enterprises and end users. As the amount of data being produced and stored increases, the capacity of vector databases decreases and the indexing complexity thereof increases, which may slow down context retrieval processes for use by Machine Learning (ML) and Artificial Intelligence (AI) models, including RAG models.

To mitigate space bloat and indexing complexity of vector databases, enterprises may reduce the dimensions of all data stored in the databases to a reduce number of bits. Problematically, end users (clients, hosts) may receive inaccurate context due to the lack of dimensionality of the vectors, and thus, may receive erroneous or irrelevant responses from an LLM operating with the context produced.

Accordingly, a system is proposed herein for quantizing vectors prior to indexing and storing the vectors and re-generating, but not storing, base vectors from content identified in a query and using the base vectors to restore accuracy to the context ultimately produced by the system. The system can identify a first set of nearest neighbor content items (chunks) relative to a query, then re-rank the first set of nearest neighbor content items after producing base vectors for the content items to produce a second set of nearest neighbor content items with fewer and more relevant (closer) content items. The system uses the second set of nearest neighbor content items to generate the context to restore accuracy lost by using quantized vectors during indexing processes. This reduces space bloat issues by storing smaller vectors, increase indexing and retrieval complexity and speed by querying smaller vectors, and increase accuracy of context generation by re-generating and sorting base vectors to produce context.

Various embodiments of the present technology provide for a wide range of technical effects, advantages, and/or improvements to computing systems and components. For example, various embodiments may include one or more of the following technical effects, advantages, and/or improvements: 1) data storage savings; 2) data storage access and indexing efficiency; and/or 3) context generation efficiency and accuracy.

In particular, the advantages of the technology disclosed herein include methods for indexing content chunks and generating context based on the content chunks. For an organization, the proposed solution can reduce the size of vectors and indices corresponding to content chunks for efficient look-up and access thereof when generating context for LLM prompts. Ultimately, the systems, methods, and devices disclosed herein can reduce space bloat with respect to vectors in a vector database and increase accuracy with respect to retrieval augmented generation (RAG) operations.

In an example embodiment, a method for operating a computer-implemented service to provide enhanced context for retrieval augmented generation is provided. The method includes receiving a context request for content with which to augment a prompt and generating a base vector based on input data in the context request and quantizing the base vector to produce a quantized vector. The method also includes searching a vector database to identify content items based at least on the quantized vector and obtaining the content items and generating base vectors for the content items. The method further includes selecting a subset of the content items based on at least on the base vector generated for the input data and the base vectors for the content items and replying to the context request with the subset of the content items.

In another example embodiment, an apparatus is provided. The apparatus includes one or more computer-readable storage media, and program instructions stored on the one or more computer-readable storage media executable by a processing device that, based on being read and executed by the processing device, direct the processing device to perform various functions. For example, the program instructions may direct the processing device to, receive a context request for content with which to augment a prompt, generate a base vector based on input data in the context request and quantize the base vector to produce a quantized vector, search a vector database to identify content items based at least on the quantized vector, obtain the content items and generate base vectors for the content items, select a subset of the content items based at least on the base vector generated for the input data and the base vectors generated for the content items, and reply to the context request with the subset of the content items.

In yet another example embodiment, one or more non-transitory computer-readable storage media is provided. The one or more non-transitory computer-readable storage media have program instructions stored thereon executable by one or more processors of a context service that, when executed by the one or more processors, direct the one or more processors to perform various functions. For example, the program instructions may direct the one or more processors to receive a context request for content with which to augment a prompt, generate a base vector based on input data in the context request and quantize the base vector to produce a quantized vector, search a vector database to identify content items based at least on the quantized vector, obtain the content items and generate base vectors for the content items, select a subset of the content items based at least on the base vector generated for the input data and the base vectors generated for the content items, and reply to the context request with the subset of the content items.

**Figure** 8 illustrates computing system 801, which is representative of any system or collection of systems in which the various applications, processes, services, and scenarios disclosed herein may be implemented. Examples of computing system 801 include, but are not limited to server computers, web servers, cloud computing platforms, and data center equipment, as well as any other type of physical or virtual server machine, container, and any variation or combination thereof.

Computing system 801 may be implemented as a single apparatus, system, or device or may be implemented in a distributed manner as multiple apparatuses, systems, or devices. Computing system 801 includes, but is not limited to, processing system 802, storage system 803, software 805, communication interface system 807, and user interface system 809. Processing system 802 is operatively coupled with storage system 803, communication interface system 807, and user interface system 809.

Processing system 802 loads and executes software 805 from storage system 803. Software 805 includes and implements context process 806, which is representative of the processes discussed with respect to the preceding Figures, such as training method 201 and inference method 202, as well as operational scenarios and sequences, such as those in Figures 4A, 4B, 5A, 5B, 7A, and 7B. When executed by processing system 802, software 805 directs processing system 802 to operate as described herein for at least the various processes, operational scenarios, and sequences discussed in the foregoing implementations. Computing system 801 may optionally include additional devices, features, or functionality not discussed for purposes of brevity.

Referring still to Figure 8, processing system 802 may include a microprocessor and other circuitry that retrieves and executes software 805 from storage system 803. Processing system 802 may be implemented within a single processing device but may also be distributed across multiple processing devices or sub-systems that cooperate in executing program instructions. Examples of processing system 802 include general purpose central processing units, microcontroller units, graphical processing units, application specific processors, integrated circuits, application specific integrated circuits, and logic devices, as well as any other type of processing device, combinations, or variations thereof.

Storage system 803 may comprise any computer readable storage media readable by processing system 802 and capable of storing software 805. Storage system 803 may include volatile and nonvolatile, removable, and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal. Storage system 803 may be implemented as a single storage device but may also be implemented across multiple storage devices or sub-systems co-located or distributed relative to each other. Storage system 803 may comprise additional elements, such as a controller capable of communicating with processing system 802 or possibly other systems.

Software 805 (including context process 806) may be implemented in program instructions and among other functions may, when executed by processing system 802, direct processing system 802 to operate as described with respect to the various operational scenarios, sequences, and processes illustrated herein. For example, software 805 may include program instructions for implementing content storage and indexing, context storage, content and context retrieval, vector generation, vector quantization, and related processes and procedures as described herein.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

The included descriptions and figures depict specific embodiments to teach those skilled in the art how to make and use the best mode. For the purpose of teaching inventive principles, some conventional aspects have been simplified or omitted. Those skilled in the art will appreciate variations from these embodiments that fall within the scope of the disclosure. Those skilled in the art will also appreciate that the features described above may be combined in various ways to form multiple embodiments. As a result, the invention is not limited to the specific embodiments described above, but only by the claims and their equivalents.

## Claims

1. A method of operating a computer-implemented service to provide enhanced context for retrieval augmented generation, the method comprising:
receiving a context request for content with which to augment a prompt;
generating a base embedding vector based on input data in the context request and quantizing the base embedding vector to produce a quantized vector;
searching a vector database to identify a set of content items based at least on the quantized vector;
obtaining the content items and generating base embedding vectors for the content items;
selecting a subset of the content items based at least on the base embedding vector generated for the input data and the base embedding vectors for the content items; and
replying to the context request with the subset of the content items.

2. The method of claim 1, wherein the vector database includes quantized vectors stored in association with the content items, and wherein a size of each dimension of each of the base embedding vectors and the base embedding vector generated for the input data is greater than a size of each dimension of each of the quantized vectors.

3. The method of one of claims 1 or 2, wherein quantizing the base embedding vector to produce the quantized vector comprises performing a binary quantization operation.

4. The method of one of claims 1 to 3, wherein searching the vector database to identify the content items comprises:
performing a nearest neighbor search based on the quantized vector for a first nearest number of quantized vectors in the vector database and obtaining content item identifiers for the first nearest number of quantized vectors; and
querying a content database based on the content item identifiers to obtain the content items;
wherein selecting the subset of the content items based at least on the base embedding vector generated for the input data and the base embedding vectors generated for the content items comprises performing a nearest neighbor search based on the base embedding vector generated for the input data for a second nearest number of base embedding vectors among the base embedding vectors generated for the content items.

5. The method of claim 4, wherein the second nearest number is less than the first nearest number, and wherein the nearest neighbor search is further based on a distance metric, and wherein the distance metric comprises at least one of a Euclidean distance metric, a Manhattan distance metric, and a Cosine similarity metric.

6. The method of one of claims 1 to 5, further comprising:
receiving indexing requests from one or more clients, wherein each indexing request comprises one or more content items; and
for each of the indexing requests:
generating a quantized vector for each of the one or more content items of the indexing request; and
storing the quantized vector and a content item identifier associated with each of the one or more content items in the vector database;
wherein the content item identifiers comprise at least one of a file name, a path, and an offset of a document.

7. The method of claim 6, wherein generating the quantized vector comprises, for each of the indexing requests:
generating a base embedding vector for a given index request; and
performing a binary quantization operation on the base vector.

8. The method of one of claims 1 to 7, wherein the content items comprise document chunks, wherein each of the document chunks comprises at least one of a text string, a sentence, and a paragraph in a document.

9. A computing apparatus comprising:
one or more computer-readable storage media; and
program instructions stored on the one or more computer-readable storage media executable by a processing device that, based on being read and executed by the processing device, direct the processing device to:
receive a context request for content with which to augment a prompt;
generate a base vector based on input data in the context request and quantizing the base vector to produce a quantized vector;
search a vector database to identify content items based at least on the quantized vector;
obtain the content items and generate base vectors for the content items;
select a subset of the content items based at least on the base vector generated for the input data and the base vectors generated for the content items; and
reply to the context request with the subset of the content items.

10. The computing apparatus of claim 9, wherein:
the vector database includes quantized vectors stored in association with the content items;
a size of each dimension of each of the base vectors generated for the content items and the base vector generated for the input data is greater than a size of each dimension of each of the quantized vectors; and
to quantize the base vector to produce the quantized vector, the program instructions direct the processing device to perform a binary quantization operation.

11. The computing apparatus of one of claims 9 or 10, wherein to search the vector database to identify the content items, the program instructions direct the processing device to:
perform a nearest neighbor search based on the quantized vector for a first nearest number of quantized vectors in the vector database and obtain content item identifiers for the first nearest number of quantized vectors; and
query a content database based on the content item identifiers to obtain the content items;
wherein the nearest neighbor search is further based on a distance metric.

12. The computing apparatus of claim 11, wherein:
to select the subset of the content items based at least on the base vector generated for the input data and the base vectors generated for the content items, the program instructions direct the processing device to perform a nearest neighbor search based on the base vector generated for the input data for a second nearest number of base vectors among the base vectors generated for the content items;
the second nearest number is less than the first nearest number;
the nearest neighbor search is further based on the distance metric; and
the distance metric comprises at least one of a Euclidean distance metric, a Manhattan distance metric, and a Cosine similarity metric.

13. The computing apparatus of one of claims 9 to 12, wherein the program instructions further direct the processing device to:
receive indexing requests from one or more clients, wherein each indexing request comprises one or more content items; and
for each of the indexing requests:
generate a quantized vector for each of the one or more content items of the indexing request; and
store the quantized vector, a content item identifier associated with each of the one or more content items, and the one or more content items in the vector database.

14. The computing apparatus of claim 13, wherein to generate the quantized vector for each of the one or more content items, the program instructions direct the processing device to, for each of the indexing requests:
generate a base vector for a given index request; and
perform a binary quantization operation on the base vector.

15. One or more non-transitory computer-readable storage media having stored thereon program instructions executable by one or more processors of a computer-implemented service to provide enhanced context for retrieval augmented generation that, when executed by the one or more processors, direct the one or more processors to:
receive a context request for content with which to augment a prompt;
generate a base vector based on input data in the context request and quantize the base vector to produce a quantized vector;
search a vector database to identify content items based at least on the quantized vector;
obtain the content items and generate base vectors for the content items;
select a subset of the content items based at least on the base vector generated for the input data and the base vectors generated for the content items; and
reply to the context request with the subset of the content items.
